# EUROPEAN PATENT APPLICATION

(11) **EP 1 227 684 A2**
(43) Date of publication of application: **31.07.2002**
(21) Application number: 02000955.1
(22) Date of filing: 16.01.2002
(51) Int. Cl.: H04N 7/26, H04N 7/50

(54) **Encoding of video signals**

(30) Priority: 19.01.2001 GB 0100477
(71) Applicant: MOTOROLA, INC., Schaumburg, IL 60196 (US)
(72) Inventor: Bourne, David Ronald, Bishops Green, Newbury, Berks RG20 4HT (GB); McKoen, Kevin, Bishop's Sutton, Hampshire,SO24 0AT (GB)
(74) Representative: Treleven, Colin

(57) **Abstract**

A video communication system has an encoder (250) arranged to encode a digital video image signal at different quantisation levels. A segmentation arrangement (220) of the system divides the digital video signal into first and second image segments. Encoding means identifies INTRA coded frames, and for such frames encodes the first image segment at a low quantisation level and the second image segment at a high quantisation level. In this way, the first and the second segments may be transmitted over a network as a single encoded signal (260) having both low and high quantisation levels.

The first image segment provides a high spatial resolution for objects of interest to a user, coupled with a quick first image display time. Therefore, there is a significant reduction in the transmission time without sacrificing the spatial image resolution of the object(s) of interest.

The invention may comprise part of a security camera, or a mobile radio unit, such as a mobile phone, a portable or mobile PMR radio, a personal digital assistant, a laptop computer or a wirelessly networked PC.

## Description

### Field of the Invention

This invention relates to video communication systems and particularly, but not exclusively, to digital video image encoding techniques.

### Background of the Invention

It is frequently necessary to transmit images following an internally or externally generated trigger event. This may typically occur in a security surveillance application, where the trigger event is an alarm.

For example, in systems using ITU H.263 [ITU-T Recommendation, H.263, "Video Coding for Low Bit Rate Communication"] video compression, the first frame of a video sequence is transmitted as intra-coded information. This is followed by more concisely transmitted frames of inter-coded information, these frames being transmitted faster than the first frame. Bandwidth is a valuable commodity in low bandwidth transmission systems and the intra-coded frame frequently contains a large amount of data and, as a consequence, takes a long time to transmit.

In the context of the present invention, and the indications of the advantages of the present invention over the known art, the expression "video transmission" is used to encompass various video techniques. These typically involve real-time, or near real-time, transmission of images at various data rates. However, the video techniques concerned may for example also include video that is streamed, or encoded for storage with the ability to be viewed later.

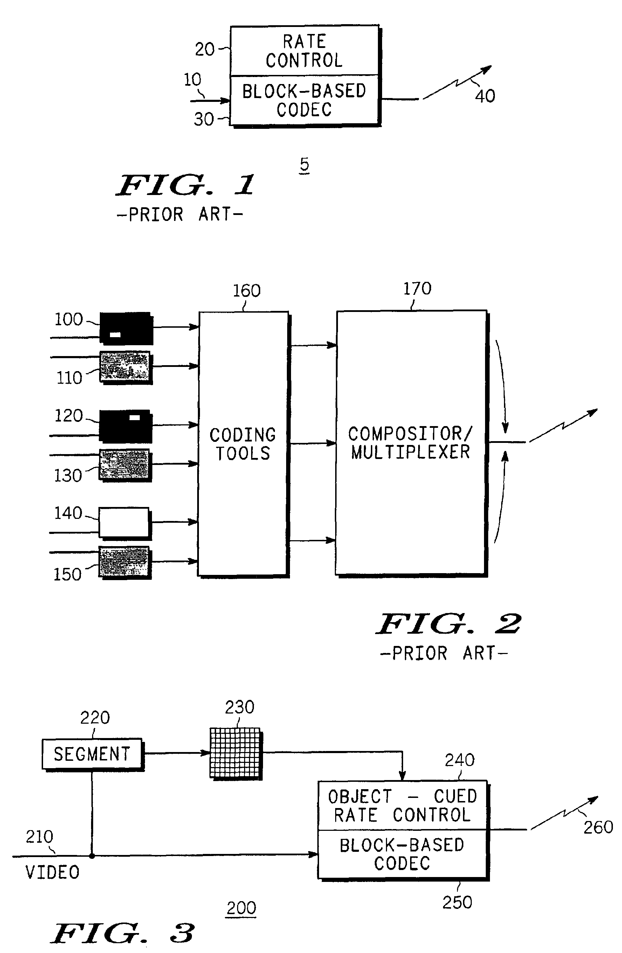

Referring to FIG. 1 there is shown a prior art video communication system 5 employing a block-based codec such as the well-known H.263 set of coding tools. A video signal 10 is provided to a block-based codec 30, which processes the video signal 10 and provides an encoded output signal 40. A rate control element 20 controls the frame rate of the block-based codec 30, thus determining the data bandwidth of the encoded output signal 40.

Therefore, the designer of video communication sequences is left with a dilemma: the intra-frame can be sent with low compression to give a good spatial resolution. However, this takes a long time to transmit.

Alternatively, the image can be transmitted with a high degree of compression. However, as such, the resulting image may have a poor spatial resolution, image detail may be of too poor a quality to be recognisable to the recipient, and the perceived image quality will be poor. This makes it difficult to extract information from the image just when the user needs it the most, such as after a trigger due to an alarm or other event.

For the first image to be received and displayed at the decoder, a compromise is frequently adopted between the spatial resolution of the image and the communication delay. This however leads to sub-optimal system performance. For example, a first high compression image may be transmitted with a low delay and the detail filled in with later inter-frames. This however, leads to a time delay whilst the image builds up to an acceptable spatial resolution for the user.

The MPEG-4 standard will provide tools that use alpha maps to individually encode video objects and their shape. In the MPEG-4 standard, the video object is defined as a particular 2-D object in the scene. The video object is an entity in the bitstream that the user can access and manipulate.

Referring now to FIG. 2, there is shown a prior art video communication system employing the MPEG-4 object-based codec. With the MPEG-4 system, a video image comprises a number of video objects (VOs) created using alpha-maps. A first VO is provided by a video signal 110 and an associated alpha-map 100. Similarly, second and third VOs are provided by video signals 130 and 150, with their associated alpha-maps 120 and 140 respectively.

With this system, the background scenery of a video image and foreground objects of greater interest can be sent as separate VOs. MPEG-4 coding tools 160 and multiplexing tools 170 allow different VOs to be encoded at different bit rates. Therefore, a low bit-rate could be specified for a VO containing background scenery and a higher bit rate employed for a VO containing foreground objects.

However, MPEG-4's object-based functionalities, including the use of alpha-maps, are targeted at higher data rate systems (typically > 64 Kbps), because each video object shape has to be encoded and transmitted to the receiver. This represents an unacceptable overhead when used in narrowband video communication systems.

Other object-based video coding schemes, (such as that described by H. Luo et al., "Statistical model based video segmentation and its application to very low bit rate video coding", IEEE International Conference on Image Processing, Chicago, October 1998), do not address the delay of the first intra-frame. However, as explained above, this is crucial in event-triggered transmission over narrowband communication channels.

There is thus a need to provide a video communication system, a video communication unit and methods of encoding/decoding video data where the abovementioned disadvantages may be alleviated.

### Statement of Invention

In accordance with a first aspect of the present invention there is provided a video communication unit, as claimed in claim 1. In accordance with a second aspect of the present invention there is provided a method of encoding a digital video image signal, as claimed in claim 3.

### Brief Description of the Drawings

A video communication system, video communication unit and methods of encoding/decoding video data incorporating the present invention will now be described, by way of example only, with reference to the accompanying drawings. In the drawings:
FIG.s 1 and 2 show block diagrams of prior art video communication systems; and
FIG. 3 shows a block diagram of a video communication system in accordance with the present invention.

### Description of a Preferred Embodiment

In the preferred embodiment of this invention, a block-based video coding framework such as ITU H.263 is used. The H.263 standard does not envisage object based encoding, as was described earlier with reference to the MPEG4 standard.

In the encoder, the compression ratio within a frame of fixed pixel size and image content is primarily determined by how coarsely quantised the coefficients of the discrete cosine transform (DCT) transformed pixel blocks are. The higher the quantisation level, the coarser the image, and vice-versa.

Referring to FIG. 3, a video communication system using an object-cued codec is shown. An input video signal 210 to be encoded is provided to a block-based codec 250, whereupon it is encoded and transmitted as an encoded digital video signal 260 in a manner to be further described below. The input video signal 210 is also provided to a segmentation element 220, which divides the input signal 210 into a plurality of image segments 230. This information is used to control an object-cued rate control element 240, which is coupled to control the compression parameters of the block-based codec 250.

The encoded digital video signal 260 is transmitted via a communication network such as an air interface (not shown) to a receiver unit (not shown) whereupon it is decoded using well-known techniques. The communication network is preferably a low bandwidth network, with an average baud rate typically of less than 64 kbps.

The image segmentation performed by the segmentation element 220 is used to define objects of interest. The segment(s) containing objects of interest in a first Intra-coded frame can be transmitted with finer quantisation, rather than transmitting the first-intra frame using the same quantisation level for the whole frame. The quantisation level will be varied accordingly, such that the objects of interest are coded with fine (low level) quantisation and those of less interest, such as the image background, are coded using coarse (high level) quantisation. The process of segmenting an image is itself well known in the art, and is described in detail in GB patent applications GB 9914384.4 and GB 9912082.6.

Each single image frame in a video stream is often referred to as a 'picture' or a 'scene'.

In accordance with the present invention, the first and second segments selected by segmentation element 220 for an intra-frame comprise a series of blocks or macroblocks of the intraframe. Thus the first segment comprises all the blocks or macroblocks of the intraframe that contain any part of the object or objects of interest of that intraframe. The second segment comprises the blocks or macroblocks that do not contain any part of the object or objects of interest. This way of identifying a part of the intraframe for particular encoding differs fundamentally from the various pre-defined video objects that are employed in the MPEG4 codec.

In this way, high spatial resolution is provided, for the object(s) of interest. Furthermore, a quick first image communication time is provided at the decoder's display, due to the reduced amount of data to be transmitted. In addition, subsequent video frames will be transmitted with better spatial quality for the object(s) of interest, because they benefit from a low distortion rendition of the object from which a prediction is made, since the first frame has high spatial resolution.

After the initial intra-frame the majority of the available bandwidth will continue to be allocated to the object(s) of interest to maintain good spatial resolution. The background's spatial resolution will only improve when the available bandwidth permits. In reality this might be, for example, when the object(s) of interest are stationary. The high frame update rate and/or the high spatial resolution for the object(s) of interest can therefore be maintained when transmitted over a limited bandwidth system. These encoding methods, for subsequent inter-frame encoding of the image sequence, are described in detail in GB patent applications GB 9914384.4 and GB 9912082.6.

The transmission times for the video signal 210 can be estimated using a simple linear scaling between the proportion of the image using a low Q (Quantisation) value and the proportion using a high Q value.

Consider an example image sequence containing a person about to enter a building. A typical proportion of the image covered by the person could be 13%. This is the proportion of the video signal that will be transmitted with a low Q value.

In practice, the number of bits required to encode an object of interest will also depend on the detail within the object and on the extra bits required in the encoder's syntax to signal changes in quantisation. Since objects of interest are usually more detailed than the background, this may result in a figure slightly higher than 13%.

**Table 1:**

| Transmission times using CIF and QCIF formats | | | |
|---|---|---|---|
| Image Size | How image is transmitted | Est. time for 1st frame transmission @19.2 kb/s | transmission time, expressed as % of time used for transmission without using invention |
| QCIF | Q=1 | 16.05 sec | 18% (82% reduction) |
| QCIF | 13% as Q=1, 87% as Q=31 | 2.83 sec | |
| QCIF | Q=6 | 4.94 sec | 28% (72% reduction) |
| QCIF | 13% as Q=6, 87% as Q=31 | 1.38sec | |
| CIF | Q=1 | 44.75 sec | 18% (82% reduction) |
| CIF | 13% as Q=1, 87% as Q=31 | 8.20 sec | |
| CIF | Q=6 | 15.11 sec | 19% (71% reduction) |
| CIF | 13% as Q=6, 87% as Q=31 | 4.34 sec | |

Table 1 shows the results of using this invention with well-known 'Common Intermediate Format' (CIF) and 'Quarter Common Intermediate Format' (QCIF) video formats.

As can be seen from Table 1, there is a significant reduction in transmission time without sacrificing the spatial image resolution of the object(s) of interest. It is also worth noting that with this example it would be quicker to transmit a hybrid CIF image rather than a comparable fixed Q QCIF image. Note that Q=1 is the lowest quantiser value permitted by H.263, Q=31 is the highest and Q=6 is a commonly employed quantiser value.

Another example of this technique for frame 20 of the ISO MPEG-4 test sequence "Hall Monitor" at 20 Kbits/sec (with object of interest = 7.07% of frame), gives the following results:
(i) Coding the object with Q=6 and the background with Q=31 gives a reduction of 62% in transmission time compared to coding the whole frame at Q=6.
(ii) Coding the object with Q=12 (another common quantisation value in many low bit rate video applications) and background at Q=31 gives a transmission time substantially equivalent to that required when coding the whole frame at the coarse quantisation of Q=25.

It is also possible to simultaneously provide improved object rendition and reduced transmission time. For instance, coding the object with Q=6 and the background with Q=31 still provides a 35% reduction in the time required to transmit, compared to transmission of the whole frame with Q=12.

The video communication system, video communication unit and methods of encoding/decoding video data described above that use this invention provide a significant reduction in the transmission time, without sacrificing the spatial image resolution of the object(s) of interest.

The 'segmentation' of the present invention usually refers only to segmenting frames of the video sequence, rather than the whole sequence itself. So this segmentation is a 'spatial' segmentation, rather than a spatio/temporal segmentation. Although this is often the case, under certain circumstances we may also want to allow the entire sequence to be segmented temporally as well. This is important for actions based on scene changes or new video shots, which may also involve the sending of new INTRA frames.

The present invention may be employed for example in a mobile radio device. Examples of such devices are mobile 'phones, portable or mobile 'PMR' radios, personal digital assistants, lap-top computers and PCs that are wirelessly networked. All of these devices may need to transit frames of video, for example from a built-in camera. The present invention may also be used in a fixed device that is wirelessly linked, for example a security camera that uses a low bandwidth radio link. Because the radio link to and from these devices may be of low or varying bandwidth, and may be error prone, the present invention offers particular advantages when used to transmit video over this radio link.

This invention is also advantageous for video streaming applications where video files are stored on a server, as it enables a reduced file size on the server and a reduced time lag for the first frame to be displayed to a user.

Furthermore, in some systems, the first frame of a video stream may be decoded instantaneously but there are frame 'skips' for the frames that follow. In other words, the delay is after the first frame. In these cases, the reduced intra-frame data size mitigates this delay.

In addition, it is within the contemplation of the invention that the segmented image(s) of the INTRA coded frames may be a single image, encoded at a single quantisation level. Alternatively, the segmented image may include a series of image segments encoded at any or all of their respective quantisation level(s).

It will be appreciated that alternative embodiments to that described above are possible. For example, in addition to the implementation using a compliant H.263 data stream, this invention can also be used with other low bit-rate video communication methods. The invention may be used with a variety of video communication systems designed for operation at different transmission rates, including existing standards such as ITU H.261 and MPEG-1, MPEG-2 or MPEG-4 standards.

Also, it will be appreciated that intra-frames are not limited to the first frame of a video stream or file. Intra-frames may also be used periodically in subsequent frames.

Furthermore, the relative size and number of objects of interest may differ from the examples given above. Similarly, the quantisation levels chosen above are by way of example only, and it will be appreciated that various quantisation levels may be utilised in the present invention. Similarly, the precise arrangements of the communication network, including the baud rate, may differ from the example given above.

In summary, a video communication unit has been provided for transmitting a digital video image signal. The unit includes segmentation means arranged to divide the digital video image signal into at least a first and a second image segment; encoding means arranged to identify INTRA coded frames and, for said frames, to encode the first image segment at a first quantisation level and to encode the second image segment at a second quantisation level; communication means coupled to the encoding means for transmitting a single encoded digital video signal comprising the first and the second image segments over a communication network.

In addition, a video communication system has been provided including the above video communication unit and further including a reception unit arranged to receive the encoded digital video signal from the communication means via the communication network, the reception unit including decoding means arranged to decode the encoded digital video signal.

Furthermore, a method of encoding a digital video image signal has been provided comprising the steps of segmenting the digital video image signal into at least a first and a second image segment; identifying INTRA coded frames; encoding, for said frames, the first image segment at a first quantisation level; encoding, for said frames, the second image segment at a second quantisation level; and transmitting a single encoded digital video signal that includes the first and the second image segments over a communication network.

A method of transmitting video data has also been provided including the above steps of encoding a digital video image signal and further including the steps of:
receiving the single encoded digital video signal at a remote location via the communication network; and
decoding the single encoded digital video signal.

Finally, a mobile radio device comprising a video communication unit in accordance with the aforementioned description(s), where the communication network comprising at least one radio link has been provided.

Thus a video communication system, video communication unit and methods of encoding/decoding video data have been provided, in which the aforementioned disadvantages with the prior art have been substantially alleviated.

## Claims

1. A video communication unit (200) for transmitting a digital video image signal (210), the unit comprising:
segmentation means (220) arranged to divide the digital video image signal (210) into at least a first and a second image segment;
encoding means (240) arranged to identify INTRA coded frames and, for said INTRA coded frames, to encode the first image segment at a first quantisation level and to encode the second image segment at a second quantisation level; and
communication means (250) coupled to the encoding means (240) for transmitting a single encoded digital video signal (260) comprising the first and the second image segments over a communication network.

2. A video communication system, comprising the video communication unit (200) of claim 1 and further comprising a reception unit arranged to receive the encoded digital video signal (260) from the communication means (250) via the communication network, the reception unit including decoding means arranged to decode the encoded digital video signal.

3. A method of encoding a digital video image signal comprising the steps of:
segmenting (220) the digital video image signal into at least a first and a second image segment;
identifying INTRA coded frames;
encoding (240), for said INTRA coded frames, the first image segment at a first quantisation level;
encoding (240), for said INTRA coded frames, the second image segment at a second quantisation level; and
transmitting (250) a single encoded digital video signal (260) comprising the first and the second image segments over a communication network.

4. A method of transmitting video data comprising the method of claim 3 and the further steps of:
receiving the single encoded digital video signal (260) at a remote location via the communication network; and
decoding the single encoded digital video signal.

5. The system, unit or method of any preceding claim wherein the quantisation level applied to the first image segment is less than the quantisation level applied to the second image segment, such that the first image segment, when decoded, has a greater spatial resolution than that of the second image segment.

6. The system, unit or method of claim 5, wherein the first image segment pertains to at least one object of greater user interest than the object or objects of the second image segment.

7. The system, unit or method of any preceding claim, wherein the first image segment and/or second image segment of said INTRA coded frames include a series of image segments encoded at their respective quantisation level(s).

8. The system, unit or method of any preceding claim, wherein the communication network is a low bandwidth network, preferably less than 64 kilobits per second.

9. The system, unit or method of any previous claim, wherein the first segment comprises all the blocks of an INTRA coded frame that contain any portion of the at least one object of interest.

10. The system, unit or method of any previous claim, wherein the second segment comprises all the blocks of an INTRA coded frame that do not contain any portion of the at least one object of interest.

11. A mobile radio device comprising a video communication unit in accordance with any of claims 1 or 5-10, the communication network comprising at least one radio link, the mobile radio device being a mobile phone, a portable or mobile PMR radio, a personal digital assistant, a lap-top computer or a wirelessly networked PC.

12. A security camera comprising a video communication unit in accordance with any of claims 1 or 5-10, the communication network comprising a radio link to the security camera.
